# FASCICULE DE BREVET EUROPEEN

(11) **EP 3 206 786 B1**
(45) Date de publication et mention de la délivrance du brevet: **29.12.2021**
(21) Numéro de dépôt: 15774636.3
(22) Date de dépôt: 06.10.2015
(51) Int. Cl.: B01J 37/03, B01J 37/34, B01J 35/00, B01J 23/62, B01J 23/63, B01J 23/652

(54) **PROCÉDÉ DE SYNTHÈSE D'UNE COMPOSITION PHOTOCATALYTIQUE PAR CONDENSATION PHOTO-ASSISTÉE**
VERFAHREN ZUR SYNTHESE EINES FOTOKATALYTISCHEN ZUSAMMENSETZUNG DURCH LICHTUNTERSTÜTZTE KONDENSATION
METHOD FOR SYNTHESISING A PHOTOCATALYTIC COMPOSITION BY PHOTO-ASSISTED CONDENSATION

(30) Priorité: 14.10.2014 FR 1459844
(43) Date de publication de la demande: 23.08.2017
(73) Titulaire: IFP Energies nouvelles, 92500 Rueil-Malmaison (FR); Centre National de la Recherche Scientifique, 75794 Paris Cedex 16 (FR); Université Claude Bernard Lyon 1, 69100 Villeurbanne (FR)
(72) Inventeur: LOFFICIAL, Dina, F-69006 Lyon (FR); FECANT, Antoine, F-69530 Brignais (FR); UZIO, Denis, F-69230 Saint Genis Laval (FR); PUZENAT, Eric, F-69006 Lyon (FR); GEANTET, Christophe, F-01700 Miribel (FR)
(74) Mandataire: IFP Energies nouvelles
(86) Numéro de dépôt international: PCT/EP2015/072994
(87) Numéro de publication internationale: WO 2016/058860

(56) Documents cités:
- WO-A2-2009/041543
- US-A1- 2006 210 636
- QINGGE ZHAI ET AL: "Photocatalytic Conversion of Carbon Dioxide with Water into Methane: Platinum and Copper(I) Oxide Co-catalysts with a Core-Shell Structure", ANGEWANDTE CHEMIE INTERNATIONAL EDITION, vol. 52, no. 22, 27 mai 2013 (2013-05-27), pages 5776-5779, XP055197637, ISSN: 1433-7851, DOI: 10.1002/anie.201301473
- SATOSHI NAGAYA ET AL: "Deposition of ZnO Particles by Photocatalytic Reaction", CHEMISTRY LETTERS, vol. 41, no. 9, 1 janvier 2012 (2012-01-01), pages 993-995, XP055196781, ISSN: 0366-7022, DOI: 10.1246/cl.2012.993
- KAZUHIKO MAEDA ET AL: "Noble-Metal/Cr2O3 Core/Shell Nanoparticles as a Cocatalyst for Photocatalytic Overall Water Splitting", ANGEWANDTE CHEMIE INTERNATIONAL EDITION, vol. 45, no. 46, 27 novembre 2006 (2006-11-27), pages 7806-7809, XP055197720, ISSN: 1433-7851, DOI: 10.1002/anie.200602473
- ZHONGHUA LI ET AL: "CuO/Cu/TiOnanotube Ohmic heterojunction arrays with enhanced photocatalytic hydrogen production activity", INTERNATIONAL JOURNAL OF HYDROGEN ENERGY, ELSEVIER SCIENCE PUBLISHERS B.V., BARKING, GB, vol. 37, no. 8, 18 janvier 2012 (2012-01-18), pages 6431-6437, XP028477458, ISSN: 0360-3199, DOI: 10.1016/J.IJHYDENE.2012.01.075 [extrait le 2012-01-24]
- QIAO ZHANG ET AL: "A Highly Active Titanium Dioxide Based Visible-Light Photocatalyst with Nonmetal Doping and Plasmonic Metal Decoration", ANGEWANDTE CHEMIE INTERNATIONAL EDITION, vol. 50, no. 31, 25 juillet 2011 (2011-07-25), pages 7088-7092, XP055197725, ISSN: 1433-7851, DOI: 10.1002/anie.201101969

## Description

Le domaine de l'invention est celui des matériaux composite et leur application en photocatalyse. Par matériau composite on entend un solide constitué d'au moins deux composés de natures chimiques différentes.

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

### ART ANTERIEUR

Des exemples de matériaux composite contenant des semi-conducteurs, notamment des matériaux composite comprenant des particules de type cœur-couche en surface d'un support semi-conducteur existent dans la littérature. Ce type de solide a particulièrement été développé dans des applications en photocatalyse.

C. Li et al (J. Hydrogen Energy, 37, p. 6431-6437, 2012) ont dévoilé la synthèse de solides à base de nanotubes de TiO₂ sur lesquels sont déposées de manière photo-assistée des particules de cuivre métallique oxydées en leur surface.

H. Lin et al. (Catal. Comm., 21, p. 91-95, 2012) proposent un composite préparé par coprécipitation composé de AgBr/Ag/Agl, AgBr et Agl étant tous deux semi-conducteurs.

C. Wang et al. (Chem. Eng. J., 237, p.29-37, 2014) ont préparé par imprégnation successives un matériau comportant des contacts entre WO₃ et Pt d'une part et Pt et TiO₂ d'autre part.

Enfin, H. Tada (Nature Materials, 5, p. 782-786, 2006) propose un solide à base de particules hémisphériques présentant une couche de CdS autour d'un cœur d'Au, lesquelles particules sont déposées sur le semi-conducteur TiO₂.

Il est connu de Domen et al. (Angew. Chem. Int. Ed. 45, p.7806 -7809, 2006) de préparer un solide composé d'une couche de Cr₂O₃ sur des particules de métal noble tel que le rhodium, ces ensembles cœur/couche étant déposés par photoréductions successives sur un semi-conducteur de type (Ga₁₋ₓZnₓ)(N₁₋ₓOₓ). CHOPRA NITIN et al. (MATERIALS CHARACTERIZATION, vol. 96, 2014, p. 71 -77) divulgue la fabrication d'une composition de type CuO-Au-ITO ayant une architecture coeur-couche à partir de nanoparticules d'or déposées à la surface de CuO par photodéposition, sur lesquelles du ITO (oxyde d'étain et titane) a été déposé par vaporisation.

Enfin Shao et al. (Chemical Engineering Journal, 226, p. 209-216, 2013) proposent une méthode de type sol-gel pour la préparation de solides à base de microsphère de SiO₂ sur lesquels sont déposées des particules d'Au puis une couche de TiO₂.

L'objet de l'invention est de proposer un procédé de préparation de ce type de composition. Plus particulièrement, l'invention porte sur un procédé de préparation par condensation photo-assistée d'une composition comprenant un support contenant un semi-conducteur présentant à sa surface des particules de type cœur-couche, ledit cœur comportant un ou plusieurs élément(s) M à l'état métallique choisi(s) parmi le platine, le palladium, l'or, le nickel, le cobalt, le ruthénium, l'argent, le cuivre, le rhénium ou le rhodium, ladite couche comportant un oxyde métallique M'ₓO_{y}, ledit cœur est en contact direct avec ledit semi-conducteur du support et la couche recouvre au moins partiellement ledit cœur, ledit procédé comprenant les étapes suivantes :
a) on fournit un semi-conducteur comportant des particules comportant un ou plusieurs élément(s) M à l'état métallique en sa surface, et on le met en suspension sous agitation et sous irradiation par une source d'irradiation telle qu'au moins une partie du spectre d'émission de ladite source soit composée de photons d'énergies supérieures à la largeur de bande interdite du semi-conducteur,
b) on introduit sous agitation et sous irradiation de ladite source d'irradiation un précurseur soluble d'un métal M' au même degré d'oxydation que celui de l'oxyde métallique de la couche M'ₓO_{y} recherchée dans la suspension de l'étape a), ledit précurseur métallique M' contenant du gallium, de l'indium, du cérium, de l'étain, du thallium, du plomb ou du bismuth,
c) on introduit ensuite sous agitation et sous irradiation de ladite source d'irradiation un agent basique ou acide de manière à provoquer la précipitation de l'oxyde métallique M'ₓO_{y} dans la suspension de l'étape b),
d) puis on sépare la composition de la suspension de l'étape c),
e) on sèche la composition obtenue à l'étape d),
f) éventuellement, on soumet la composition séchée obtenue à l'étape e) à un traitement thermique.

Le procédé de préparation selon l'invention diffère notamment des procédés de préparation de composition présentant une architecture de type cœur-couche supporté connus de l'art antérieur, en ce que le dépôt de la couche sur le cœur métallique se fait par condensation photo-assistée, ce qui permet notamment d'utiliser un précurseur soluble d'un métal M' au même degré d'oxydation que celui de l'oxyde métallique de la couche M'ₓO_{y} recherchée. En effet, les procédés dits par photodépositions successives de l'état de l'art nécessitent l'emploi de précurseurs solubles à des degrés d'oxydation différents lesquels n'existent pas nécessairement.

Le procédé de préparation selon l'invention permet de manière simple et rapide de préparer des compositions présentant une architecture de type cœur-couche supporté et dans lesquels la couche est à base d'oxyde métallique. La sélectivité des dépôts d'oxyde métallique en surface des particules métalliques formant le cœur est induite par un principe d'attraction électrostatique entre les cations précurseurs d'oxyde M'^{δ+} en solution et la surface des particules métalliques M chargées négativement sous irradiation. En effet, il est connu de l'homme du métier que les électrons générés lors de l'absorption d'un photon par un semi-conducteur sont préférentiellement délocalisés vers les particules métalliques lorsque ledit semi-conducteur en contient à sa surface (X. Chen et al., Chem. Rev., 110, p.6503-6570, 2010). Sans vouloir être lié par une quelconque théorie, il semblerait que cette délocalisation dépend aussi d'un facteur de forme des particules métalliques sur le support semi-conducteur.

Selon une variante, à l'étape a) du procédé de prépartion, le semi-conducteur comportant des particules comportant un ou plusieurs élément(s) M à l'état métallique en sa surface est obtenu par imprégnation, suivi éventuellement par un traitement réducteur en température.

Selon une autre variante, à l'étape a), le semi-conducteur comportant des particules comportant un ou plusieurs élément(s) M à l'état métallique en sa surface est obtenu par photodéposition. Selon cette variante, le semi-conducteur comportant des particules comportant un ou plusieurs élément(s) M à l'état métallique en sa surface est obtenu en préparant sous agitation une suspension contenant un semi-conducteur, dans un mélange liquide composé d'eau et/ou d'un ou plusieurs composés organiques et au moins un précurseur métallique, et on irradie la suspension par une source d'irradiation telle qu'au moins une partie du spectre d'émission de ladite source soit composée de photons d'énergies supérieures à la largeur de bande interdite du semi-conducteur.

L'élément M est choisi parmi le platine, le palladium, l'or, le nickel, le cobalt, le ruthénium, l'argent, le cuivre, le rhénium ou le rhodium.

Selon une variante, le semi-conducteur utilisé comme support est choisi parmi un semi-conducteur inorganique, organique ou organique-inorganique, de préférence le semi-conducteur est choisi parmi TiO₂, CdO, Ce₂O₃, CeO₂, CoO, Cu₂O, CuO, FeTiO₃, In₂O₃, In(OH)₃, NiO, PbO, ZnO, ZnFe₂O₄, Ag₂S, CdS, Ce₂S₃, Cu₂S, CuInS₂, In₂S₃, ZnS et ZrS₂.

Le précurseur métallique M' contient du gallium, de l'indium, du cérium, de l'étain, du thallium, du plomb ou du bismuth.

Selon une variante, l'agent basique est choisi parmi les hydroxydes d'alcalins ou d'alcalinoterreux et les bases organiques, et l'agent acide est choisi parmi les acides inorganiques.

Selon une variante, la source d'irradiation est une source d'irradiation artificielle ou naturelle.

Selon une variante, dans l'étape d), la séparation est effectuée par centrifugation. Selon une variante, dans l'étape e), le séchage est effectué entre 30°C et 200°C.

### DESCRIPTION DETAILLEE DE L'INVENTION

L'invention porte sur un procédé de préparation par condensation photo-assistée d'une composition comprenant un support contenant un semi-conducteur présentant à sa surface des particules de type cœur-couche, ledit cœur comportant un ou plusieurs élément(s) M à l'état métallique choisi parmi le platine, le palladium, l'or, le nickel, le cobalt, le ruthénium, l'argent, le cuivre, le rhénium ou le rhodium, ladite couche comportant un oxyde métallique M'ₓO_{y}, dans lequel ledit cœur étant en contact direct avec ledit semi-conducteur du support et la couche recouvrant au moins partiellement ledit cœur, ledit procédé comprenant les étapes suivantes :
a) on fournit un semi-conducteur comportant des particules comportant un ou plusieurs élément(s) M à l'état métallique en sa surface, et on le met en suspension sous agitation et sous irradiation par une source d'irradiation telle qu'au moins une partie du spectre d'émission de ladite source soit composée de photons d'énergies supérieures à la largeur de bande interdite du semi-conducteur,
b) on introduit sous agitation et sous irradiation de ladite source d'irradiation un précurseur soluble d'un métal M' au même degré d'oxydation que celui de l'oxyde métallique de la couche M'ₓO_{y} recherchée dans la suspension de l'étape a), ledit précurseur métallique M' contenant du gallium, de l'indium, du cérium, de l'étain, du thallium, du plomb ou du bismuth,
c) on introduit ensuite sous agitation et sous irradiation de ladite source d'irradiation un agent basique ou acide de manière à provoquer la précipitation de l'oxyde métallique M'ₓO_{y} dans la suspension de l'étape b),
d) puis on sépare la composition de la suspension de l'étape c),
e) on sèche la composition obtenue à l'étape d),
f) éventuellement, on soumet la composition séchée obtenue à l'étape e) à un traitement thermique.

Dans l'étape a) on fournit un semi-conducteur comportant des particules comportant un ou plusieurs élément(s) M à l'état métallique en sa surface, et on le met en suspension sous agitation et sous irradiation par une source d'irradiation telle qu'au moins une partie du spectre d'émission de ladite source soit composée de photons d'énergies supérieures à la largeur de bande interdite du semi-conducteur.

Les semi-conducteurs utilisés comme support selon l'invention comprennent au moins un semi-conducteur inorganique, organique ou composite organique-inorganique. La largeur de bande interdite du semi-conducteur inorganique, organique ou organique-inorganique est généralement comprise entre 0,1 et 5,5 eV.

Selon une première variante, le semi-conducteur comprend au moins un solide inorganique. Le semi-conducteur inorganique peut comprendre un ou plusieurs éléments choisi parmi les éléments du groupe IVA, tels que le silicium, le germanium, le carbure de silicium ou le silicium-germanium. II peut être également composé d'éléments des groupes IIIA et VA, tels que GaP, GaN, InP et InGaAs, ou d'éléments des groupes IIB et VIA, tels que CdS, ZnO et ZnS, ou d'éléments des groupes IB et VIIA, tels que CuCl et AgBr, ou d'éléments des groupes IVA et VIA, tels que PbS, PbO, SnS et PbSnTe, ou d'éléments des groupes VA et VIA, tels que Bi₂Te₃ et Bi₂O₃, ou d'éléments des groupes IIB et VA, tels que Cd₃P₂, Zn₃P₂ et Zn₃As₂, ou d'éléments des groupes IB et VIA, tels que CuO, Cu₂O et Ag₂S, ou d'éléments des groupes VIII et VIA, tels que CoO, PdO, Fe₂O₃ et NiO, ou d'éléments des groupes VIB et VIA, tels que MoS₂ et WO₃, ou d'éléments des groupes VB et VIA, tels que V₂O₅ et Nb₂O₅, ou d'éléments des groupes IVB et VIA, tels que TiO₂ et HfS₂, ou d'éléments des groupes IIIA et VIA, tels que In₂O₃, In₂S₃ ou In(OH)₃, ou d'éléments des groupes VIA et des lanthanides, tels que Ce₂O₃, Pr₂O₃, Sm₂S₃, Tb₂S₃ et La₂S₃, ou d'éléments des groupes VIA et des actinides, tels que UO₂ et UO₃. De manière préférée, le semi-conducteur est choisi parmi le TiO₂, le Bi₂S₃, le Bi₂O₃, le CdO, le Ce₂O₃, CeO₂, le CoO, le Cu₂O, le Fe₂O₃, le FeTiO₃, l'In₂O₃, l'In(OH)₃, le NiO, le PbO, le ZnO, l'Ag₂S, le CdS, le Ce₂S₃, le Cu₂S, le CuInS₂, l'In₂S₃, le ZnFe₂O₃, le ZnS et le ZrS₂. De manière très préférée, le semi-conducteur est choisi parmi le TiO₂, le ZnO, le WO₃, le Fe₂O₃, le CuO, le ZnFe₂O₄, le MoS₂, le Bi₂S₃, le Bi₂O₃ et le In(OH)₃.

Selon une autre variante, le semi-conducteur comprend au moins un semi-conducteur organique. Parmi les semi-conducteurs organiques, on peut citer le tétracène, l'anthracène, le polythiophène, le polystyrènesulfonate, les phosphyrènes et les fullerènes.

Selon une autre variante, le semi-conducteur comprend au moins un semi-conducteur organique-inorganique. Parmi les semi-conducteurs organiques-inorganiques, on peut citer les solides cristallisés de type MOF (pour Metal Organic Frameworks selon la terminologie anglo-saxonne). Les MOFs sont constitués de sous-unités inorganiques (métaux de transition, lanthanides...) connectées entre elles par des ligands organiques (carboxylates, phosphonates, imidazolates...), définissant ainsi des réseaux hybrides cristallisés, parfois poreux.

Le semi-conducteur peut éventuellement être dopé avec un ou plusieurs ions choisis parmi des ions métalliques, tels que par exemple des ions de V, Ni, Cr, Mo, Fe, Sn, Mn, Co, Re, Nb, Sb, La, Ce, Ta, Ti, des ions non-métalliques, tels que par exemple C, N, S, F, P, ou par un mélange d'ions métalliques et non-métalliques.

Selon une autre variante, le semi-conducteur peut-être sensibilisé en surface avec toutes molécules organiques susceptibles d'absorber des photons.

Le semi-conducteur peut se présenter sous différentes formes (poudre nanométrique, nanoobjets comportant ou non des cavités,...) ou mises en formes (films, monolithe, billes de taille micrométrique ou millimétrique, ...).

Toute méthode connue de l'homme du métier pourra être mise en œuvre pour fournir un semi-conducteur comportant des particules comprenant un ou plusieurs élément(s) M à l'état métallique en sa surface, telle que par exemple l'imprégnation, l'adsorption, le greffage ou la photodéposition.

Les méthodes par imprégnation, d'adsorption ou de greffage requièrent éventuellement un traitement réducteur en température pour obtenir des particules métalliques M supportées au degré d'oxydation 0.

De manière préférée, le dépôt d'un ou plusieurs élément(s) M à l'état métallique sous forme de particules en surface d'un support semi-conducteur est réalisée par photodéposition, de préférence par photodéposition réductrice, laquelle ne requière pas de post-traitement réducteur.

Lorsque la déposition est effectuée par photodéposition, on prépare sous agitation une suspension contenant un semi-conducteur, de préférence sous forme de poudre nanométrique, dans un mélange liquide composé d'eau et/ou d'un ou plusieurs composés organiques et au moins un précurseur métallique, et on irradie la suspension par une source d'irradiation telle qu'au moins une partie du spectre d'émission de ladite source soit composée de photons d'énergies supérieures à la largeur de bande interdite du semi-conducteur.

Le pourcentage de composés organiques contenus dans la suspension varie de 0 à 100% en volume. Les composés organiques sont généralement des alcools primaires ou secondaires, de manière préférée, les composés organiques sont le méthanol, l'éthanol ou l'isopropanol, seuls ou en mélange.

Le précurseur métallique est introduit dans le mélange sous forme de poudre soluble ou en solution, de préférence en solution aqueuse. Le précurseur du ou des éléments métalliques est généralement à base d'acétate, d'acétylacétonate, de chlorure, de nitrate, de sulfate, de carbonate ou encore à base de complexes ammoniaqués. De manière préférée, le précurseur du ou des éléments métalliques est à base de chlorure ou de nitrate.

Le précurseur métallique est un précurseur de platine, de palladium, d'or, de nickel, de cobalt, de ruthénium, d'argent, de cuivre, de rhénium ou de rhodium.

Les quantités du précurseur du ou des éléments métalliques introduites dans la suspension sont choisies de telle manière que la teneur en élément(s) à l'état métallique soit comprise entre 0,001 et 20% en poids, de manière préférée comprise entre 0,01 et 10% en poids par rapport au poids total de la composition.

Le mélange est effectué de préférence à température ambiante sous agitation, de préférence mécanique ou par bullage.

Le mélange est irradié par une source telle qu'au moins une partie du spectre d'émission soit composée de photons d'énergies supérieures à la largeur de bande interdite du semi-conducteur employé. De préférence la source émet à au moins une gamme de longueur d'onde supérieure à 280 nm, de manière très préférée de 315 nm à 800 nm, ce qui inclut le spectre UV et/ou le spectre visible. La source de rayonnement peut être toute source de rayonnement électromagnétique artificielle ou naturelle, telle que la lumière naturelle du soleil, une lampe de type Hg, une lampe de type Xe, une lampe de type LED.

La durée de cette étape est de préférence comprise entre 1 minute et 20 heures sous irradiation, de préférence comprise entre 1 minute et 5 heures.

Le semi-conducteur comportant des particules comprenant un ou plusieurs élément(s) M à l'état métallique en sa surface obtenu par photodéposition peut ensuite être séparé de la suspension. La séparation peut être effectuée par filtration ou par centrifugation. De préférence elle est effectuée par centrifugation. Généralement, cette centrifugation s'effectue pendant 10 à 60 minutes de 2000 à 10000 tours par minute. Il est ensuite de préférence soumit à au moins une étape de lavage, par exemple par de l'eau, puis séché. Le séchage est effectué entre 30°C et 200°C, généralement pendant 1 à 48 heures, de préférence sous air. Eventuellement, ce séchage peut être réalisé sous atmosphère inerte. Le séchage peut être éventuellement effectué dans une étuve ou un évaporateur rotatif. L'étape de séchage peut éventuellement se faire sous vide partiel. On obtient ainsi le semi-conducteur comportant un ou plusieurs élément(s) M à l'état métallique en sa surface qui formeront par la suite le cœurdes particules de type cœur-couche.

Le ou les éléments M à l'état métallique sont choisis parmi le platine, le palladium, l'or, le nickel, le cobalt, le ruthénium, l'argent, le cuivre, le rhénium ou le rhodium. Lesdites particules formant le cœur peuvent être composées d'un seul élément à l'état métallique ou de plusieurs éléments à l'état métallique pouvant formés un alliage.

On entend par « élément à l'état métallique » un élément appartenant à la famille des métaux et ledit élément étant au degré d'oxydation zéro (et donc sous forme de métal). Eventuellement, une fraction du ou des éléments M peut se présenter sous la forme oxydée.

Lesdites particules comportant un ou plusieurs élément(s) M à l'état métallique se présentent préférentiellement sous la forme de particules de tailles comprises entre 0,5 nm et 1000 nm, de manière très préférée entre 0,5 nm et 100 nm.

La teneur en élément(s) M à l'état métallique est comprise entre 0,001 et 20% en poids, de manière préférée comprise entre 0,01 et 10% en poids par rapport au poids total de la composition.

Dans l'étape a) du procédé selon l'invention, après avoir fourni un semi-conducteur comportant des particules comportant un ou plusieurs élément(s) M à l'état métallique en sa surface, on le met en suspension sous agitation et sous irradiation par une source d'irradiation telle qu'au moins une partie du spectre d'émission de ladite source soit composée de photons d'énergies supérieures à la largeur de bande interdite du semi-conducteur.

La solution peut être aqueuse ou organique, de préférence aqueuse. Lorsqu'il s'agit d'une solution aqueuse, elle peut éventuellement contenir toutes espèces organique ou minérale.

Le mélange est généralement effectué à une température comprise entre 5 et 90°C, de préférence entre 15 et 40°C, et de manière particulièrement préférée à température ambiante, sous agitation, de préférence mécanique ou par bullage.

La suspension est irradiée par une source telle qu'au moins une partie du spectre d'émission soit composée de photons d'énergies supérieures à la largeur de bande interdite du semi-conducteur employé. De préférence la source émet à au moins une gamme de longueurs d'onde supérieures à 280 nm, de manière très préférée comprise entre 315 nm à 800 nm, ce qui inclut le spectre UV et/ou le spectre visible. La source de rayonnement peut être toute source de rayonnement électromagnétique artificielle ou naturelle, telle que la lumière naturelle du soleil, une lampe de type Hg, une lampe de type Xe, une lampe de type LED.

La durée de cette étape est de préférence comprise entre 1 minute et 20 heures sous irradiation, de préférence comprise entre 1 minute et 5 heures.

Lors de l'étape b) du procédé selon l'invention, on introduit dans la suspension de l'étape a), sous agitation et sous irradiation de ladite source d'irradiation, un précurseur soluble d'un métal M' au même degré d'oxydation que celui de l'oxyde métallique de la couche M'ₓO_{y} recherchée.

Le précurseur métallique M' est généralement à base de chlorure, iodure, bromure, fluorure, acétate, acétylacétonate, nitrate, sulfate, hydroxyde. De manière préférée, le précurseur est le nitrate métallique ou le chlorure métallique.

Le précurseur métallique M' contient du gallium, de l'indium, du cérium, de l'étain, du thallium, du plomb ou du bismuth.

Le précurseur métallique M' peut être solubilisé avant son introduction dans de l'eau ou un mélange liquide composé d'eau et/ou d'un ou plusieurs composés organiques tels que des alcools primaires ou secondaires, et de manière préférée, le méthanol, l'éthanol ou l'isopropanol, seul ou en mélange.

Eventuellement, et afin de s'assurer de la solubilité du précurseur métallique M', un agent basique ou acide peut être ajouté au mélange afin de moduler le pH de la solution. L'homme du métier sait aisément déterminer le pH nécessaire pour la solubilisation du précurseur métallique suivant la nature de M'. Lorsqu'un agent basique est introduit il est sélectionné de préférence parmi les hydroxydes d'alcalins ou d'alcalinoterreux, les bases organiques telles que des amines ou de l'ammoniaque. Lorsqu'un agent acide est introduit il est sélectionné de préférence parmi les acides inorganiques tels que l'acide nitrique, sulfurique, phosphorique, chlorhydrique, bromhydrique ou les acides organiques tels que des acides carboxyliques ou sulfoniques.

Les quantités du précurseur métallique M' introduites dans la suspension sont choisies de telle manière que la teneur en oxyde métallique M'ₓO_{y}, exprimée en élément M, soit comprise entre 0,01 et 50 % en poids, de préférence comprise entre 0,1 et 20% en poids par rapport au poids total de la composition.

Les conditions d'agitation et d'irradiation sont celles décrites pour l'étape a), Les conditions d'agitation et d'irradiation sont de préférence identiques à celles de l'étape a). La durée de cette étape est de préférence comprise entre 1 minute et 20 heures, de préférence comprise entre 1 minute et 5 heures.

Dans l'étape c) du procédé selon l'invention, on introduit ensuite dans la suspension de l'étape b), sous agitation et sous irradiation de ladite source d'irradiation, un agent basique ou acide de manière à provoquer la précipitation de l'oxyde métallique M'ₓO_{y}. L'homme du métier sait aisément déterminer le pH nécessaire pour obtenir une telle précipitation suivant la nature de M'.

Lorsqu'un agent basique est introduit, il est sélectionné de préférence parmi les hydroxydes d'alcalins ou d'alcalinoterreux, les bases organiques telles que des amines ou de l'ammoniaque. Lorsqu'un agent acide est introduit, il est sélectionné de préférence parmi les acides inorganiques tels que l'acide nitrique, sulfurique, phosphorique, chlorhydrique, bromhydrique ou les acides organiques tels que des acides carboxyliques ou sulfoniques.

Les conditions d'agitation et d'irradiation de l 'étape c) sont celles décrites pour l'étape a), Les conditions d'agitation et d'irradiation sont de préférence identiques à celles de l'étape a). La durée de cette étape est de préférence comprise entre 1 minute et 20 heures, de préférence comprise entre 1 minute et 5 heures.

Dans l'étape d), on sépare la composition de la suspension de l'étape c). La séparation peut être effectuée par filtration ou par centrifugation. De préférence elle est effectuée par centrifugation. Généralement, cette centrifugation s'effectue pendant 10 à 60 minutes de 2000 à 10000 tours par minute. De manière préférée, un à trois lavages à l'eau sont ensuite effectués.

Dans l'étape e), on sèche la composition obtenue à l'étape d). Le séchage est effectué entre 30°C et 200°C, généralement pendant 1h à 48h, de préférence sous air. Eventuellement, ce séchage peut être réalisé sous atmosphère inerte. Le séchage peut être éventuellement effectué dans une étuve ou un évaporateur rotatif. L'étape de séchage peut éventuellement se faire sous vide partiel.

De manière éventuelle, la composition séchée obtenue à l'étape e) est soumis à un traitement thermique (étape f). Le traitement thermique est effectué sous flux d'air, d'azote, d'hydrogène ou sous vide partiel, généralement à une température entre 50°C et 500°C, de préférence pendant une durée entre 1h et 16h.

On obtient ainsi une composition comprenant un support contenant un semi-conducteur présentant à sa surface des particules de type cœur-couche, ledit cœur comportant un ou plusieurs élément(s) M à l'état métallique, ladite couche comportant un oxyde métallique M'ₓO_{y}, dans lequel ledit cœur est en contact direct avec ledit semi-conducteur du support et la couche recouvrant au moins partiellement ledit cœur. De préférence, la couche recouvre une surface supérieure à 50% du cœur métallique, et de manière préférée supérieure à 60% et de manière très préférée supérieure à 75%. Le taux de recouvrement est mesuré par XPS (spectrométrie photoélectronique au rayon X ou X-ray photoelectron spectrometry selon la terminologie anglo-saxonne), par exemple sur un appareil ESCA KRATOS^{®} Axis Ultra avec une source monochromatique Al à 1486.6 eV, et une énergie de passage de 40 eV, et exprime le recouvrement de la surface totale des particules comportant un ou plusieurs élément(s) M à l'état métallique.

Selon un aspect important de l'invention, le procédé de l'invention permet d'obtenir une composition dans laquelle le semi-conducteur formant le support est en contact direct avec des particules comportant un ou plusieurs élément(s) M à l'état métallique à sa surface, lesdites particules étant en contact direct avec ladite couche comportant de l'oxyde métallique M'ₓO_{y}. De préférence, le semi-conducteur formant le support est en outre en contact direct avec la couche comportant de l'oxyde métallique M'ₓO_{y}.

La composition préparée selon le procédé de l'invention peut être utilisée en tant que photocatalyseur.

L'invention est illustrée par les exemples suivants qui ne présentent, en aucun cas, un caractère limitatif.

### EXEMPLES

### Exemple 1 : Solide A (conforme à l'invention) Ce₂O₃/Pt/TiO₂

0,0712 g de H₂PtCl₆,6H₂O (37,5% en masse de métal) est ajouté dans 500 ml d'eau distillée. 50 ml de cette solution sont prélevés et ajoutés dans un réacteur double enveloppe en verre. 3 ml de méthanol puis 250 mg de TiO₂ (P25, Degussa^{™}) sont alors ajoutés sous agitation pour former une suspension.

Le mélange est alors laissé sous agitation et sous rayonnement UV pendant deux heures. La lampe utilisée pour fournir le rayonnement UV est une lampe HPK^{™} à vapeur de mercure de 125W.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide A' Pt/TiO₂. La teneur en élément Pt ,mesurée par spéctrométrie d'émmission atomique à source plasma (ou inductively coupled plasma atomic emission spectroscopy "ICP-AES " selon la terminologie anglo-saxonne) est de 0,93 % en masse.

Une solution de Ce(NO₃)₃ est préparée en dissolvant 0,05 g de Ce(NO₃)₃, 6H₂O (Sigma-Aldrich^{™}, 99%) dans 50 ml d'H₂O.

Dans le réacteur, ont été introduits : 0,10 g du solide A', 25 ml d'eau distillée et enfin 25 ml d'isopropanol. Le système est purgé à l'obscurité sous un flux d'argon (100 ml/min) durant 2h. Le réacteur est thermostaté à 25°C tout au long de la synthèse.

Le flux d'argon est ensuite ralenti à 30 ml/min et l'irradiation du mélange réactionnel démarre. La lampe utilisée pour fournir le rayonnement UV est une lampe HPK^{™} à vapeur de mercure de 125 W. Puis, 5 ml de la solution de nitrate de cérium sont ajoutés au mélange. Le mélange est laissé 1 heure sous agitation et irradiation. On ajoute ensuite 1 ml d'une solution de NH₃ à 30%. Le mélange est à nouveau laissé 1 heure sous agitation et irradiation.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide A Ce₂O₃/Pt/TiO₂. La teneur en élément Ce, mesurée par ICP-AES est de 1,7 % en masse. Par mesure XPS (X-Ray Photoelectron Spectrometry selon la terminologie anglo-saxonne), on mesure un recouvrement des particules de platine supérieur à 83% et des phases d'oxydes de cérium à 74% en Ce₂O₃ et 26% en CeO₂. Par microscopie électronique à transmission, on mesure une épaisseur de couche moyenne d'oxyde de cérium de 4 nm autour des particules métalliques.

### Exemple 2 : Solide B (conforme à l'invention) Ce₂O₃/Pt/ZnO

0,0710 g de H₂PtCl₆,6H₂O (37,5% en masse de métal) est ajouté dans 500 ml d'eau distillée. 50 ml de cette solution sont prélevés et ajoutés dans un réacteur double enveloppe en verre. 3 ml de méthanol puis 250 mg de ZnO (Lotus Synthesis^{™}, surface spécifique 50 m²/g) sont alors ajoutés sous agitation pour former une suspension.

Le mélange est alors laissé sous agitation et sous rayonnement UV pendant deux heures. La lampe utilisée pour fournir le rayonnement UV est une lampe HPK^{™} à vapeur de mercure de 125W.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide B' Pt/ZnO. La teneur en élément Pt mesurée par ICP-AES est de 0,80 % en masse.

Une solution de Ce(NO₃)₃ est préparée en dissolvant 0,05 g de Ce(NO₃)₃, 6H₂O (Sigma-Aldrich^{™}, 99%) dans 50 ml d'H₂O.

Dans le réacteur, ont été introduits : 0,10 g du solide B', 25 ml d'eau distillée et enfin 25 ml d'isopropanol. Le système est purgé à l'obscurité sous un flux d'argon (100 ml/min) durant 2h. Le réacteur est thermostaté à 25°C tout au long de la synthèse.

Le flux d'argon est ensuite ralenti à 30 ml/min et l'irradiation du mélange réactionnel démarre. La lampe utilisée pour fournir le rayonnement UV est une lampe HPK^{™} à vapeur de mercure de 125 W. Puis, 10 ml de la solution de nitrate de cérium sont ajoutés au mélange. Le mélange est laissé 1 heure sous agitation et irradiation. On ajoute ensuite 1 ml d'une solution de NH₃ à 30%. Le mélange est à nouveau laissé 1 heure sous agitation et irradiation.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide B Ce₂O₃/Pt/ZnO. La teneur en élément Ce mesurée par ICP-AES est de 3,7 % en masse. Par mesure XPS, on mesure un recouvrement des particules de platine supérieur à 89% et des phases d'oxydes de cérium à 81% en Ce₂O₃ et 19% en CeO₂. Par microscopie électronique à transmission, on mesure une épaisseur de couche moyenne d'oxyde de cérium de 12 nm autour des particules métalliques.

### Exemple 3 : Solide C (conforme à l'invention) Ce₂O₃/Au/TiO₂

0,0472 g de HAuCl₄,xH₂O (52% en masse de métal, Aldrich^{™}) est ajouté dans 500 mL d'eau distillée. 50 mL de cette solution sont prélevés et ajoutés dans un réacteur double enveloppe en verre. 3 mL de méthanol puis 250 mg de TiO₂ (P25, Degussa^{™}) sont alors ajoutés sous agitation pour former une suspension.

Le mélange est alors laissé sous agitation et sous rayonnement UV pendant deux heures. La lampe utilisée pour fournir le rayonnement UV est une lampe HPK^{™} à vapeur de mercure de 125W.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors un solide C' Au/TiO₂. La teneur en élément Au mesurée par ICP-AES est de 0,95 % en masse.

Une solution de Ce(NO₃)₃ est préparée en dissolvant 0,05 g de Ce(NO₃)₃, 6H₂O (Sigma-Aldrich^{™}, 99%) dans 50 ml d'H₂O.

Dans le réacteur, ont été introduits : 0,10 g du solide C', 25 ml d'eau distillée et enfin 25 ml d'isopropanol. Le système est purgé à l'obscurité sous un flux d'argon (100 ml/min) durant 2h. Le réacteur est thermostaté à 25°C tout au long de la synthèse.

Le flux d'argon est ensuite ralenti à 30 ml/min et l'irradiation du mélange réactionnel démarre. La lampe utilisée pour fournir le rayonnement UV est une lampe HPK^{™} à vapeur de mercure de 125 W. Puis, 10 ml de la solution de nitrate de cérium sont ajoutés au mélange. Le mélange est laissé 1 heure sous agitation et irradiation. On ajoute ensuite 1 ml d'une solution de NH₃ à 30%. Le mélange est à nouveau laissé 1 heure sous agitation et irradiation.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide C Ce₂O₃/Au/TiO₂. La teneur en élément Ce mesurée par ICP-AES est de 3,6 % en masse. Par mesure XPS, on mesure un recouvrement des particules d'or supérieur à 90% et des phases d'oxydes de cérium à 75% en Ce₂O₃ et 25% en CeO₂. Par microscopie électronique à transmission, on mesure une épaisseur de couche moyenne d'oxyde de cérium de 14 nm autour des particules métalliques.

### Exemple 4 : Solide D (conforme à l'invention) In₂O₃/Pt/TiO₂

0,0710 g de H₂PtCl₆,6H₂O (37,5% en masse de métal, Aldrich^{™}) est ajouté dans 500 ml d'eau distillée. 50 ml de cette solution sont prélevés et ajoutés dans un réacteur double enveloppe en verre. 3 ml de méthanol puis 250 mg de TiO₂ (P25, Degussa^{™}) sont alors ajoutés sous agitation pour former une suspension.

Le mélange est alors laissé sous agitation et sous rayonnement UV pendant deux heures. La lampe utilisée pour fournir le rayonnement UV est une lampe HPK^{™} à vapeur de mercure de 125W.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide D' Pt/Ti02. La teneur en élément Pt mesurée par ICP-AES est de 0,92 % en masse.

Une solution d'In(NO₃)₃ est préparée en dissolvant 0,05 g d'In(NO₃)₃, xH₂O (Sigma-Aldrich^{™}, 99,9%) dans 50 ml d'H₂O.

Dans le réacteur, ont été introduits : 0,10 g du solide D', 25 ml d'eau distillée et enfin 25 ml d'isopropanol. Le système est purgé à l'obscurité sous un flux d'argon (100 ml/min) durant 2h. Le réacteur est thermostaté à 25°C tout au long de la synthèse.

Le flux d'argon est ensuite ralenti à 30 ml/min et l'irradiation du mélange réactionnel démarre. La lampe utilisée pour fournir le rayonnement UV est une lampe HPK^{™} à vapeur de mercure de 125 W. Puis, 10 ml de la solution de nitrate d'indium sont ajoutés au mélange. Le mélange est laissé 1 heure sous agitation et irradiation. On ajoute ensuite 1 ml d'une solution de NH₃ à 30%. Le mélange est à nouveau laissé 1 heure sous agitation et irradiation.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide D In₂O₃/Pt/TiO₂. La teneur en élément In mesurée par ICP-AES est de 3,7 % en masse. Par mesure XPS, on mesure un recouvrement des particules de platine supérieur à 89%. Par microscopie électronique à transmission, on mesure une épaisseur de couche moyenne d'oxyde d'indium de 10 nm autour des particules métalliques.

Exemple 5: Solide E (non comforme à l'invention) Cr₂O₃/Rh/(Ga_{0.88}Zn_{0.12})(N_{0.88}O_{0.12}) Cet exemple décrit la préparation d'une composition connue de la littérature ouverte (K. Domen et al, Angew. Chem. Int. Ed. 2006, 45, 7806 -7809) composé d'une couche de Cr₂O₃ sur un cœur de Rh déposé sur un support semi-conducteur oxyniture de gallium et de zinc (Ga_{0,88}Zn_{0,12})(N_{0,88}O_{0,12}).

Le support semi-conducteur (Ga_{0,88}Zn_{0,12})(N_{0,88}O_{0,12}) est obtenu en suivant le mode opératoire présenté dans les travaux de K. Domen et al. (J. Am. Chem. Soc. 2005, 127, 8286-8287).

0,0995 g de Na₃RhCl₆ (Aldrich^{™}) est ajouté dans 500 ml d'eau distillée. 50 ml de cette solution sont prélevés et ajoutés dans un réacteur double enveloppe en verre. 3 ml de méthanol puis 250 mg de (Ga_{0,88}Zn_{0,12})(N_{0,88}O_{0,12}) sont alors ajoutés sous agitation pour former une suspension.

Le mélange est alors laissé sous agitation et sous rayonnement UV pendant deux heures. La lampe utilisée pour fournir le rayonnement UV est une lampe HPK^{™} à vapeur de mercure de 125W.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide E' Rh/(Ga_{0,88}Zn_{0,12})(N_{0,88}O_{0,12}). La teneur en élément Rh mesurée par ICP-AES est de 0,96 % en masse.

Une solution de Cr(NO₃)₃ est préparée en dissolvant 0,018 g de Cr(NO₃)₃, 9H₂O (Sigma-Aldrich^{™}, 99%) dans 50 ml d'H₂O.

Dans le réacteur, ont été introduits : 0,10 g du solide E', 25 ml d'eau distillée et enfin 25 ml d'isopropanol. Le système est purgé à l'obscurité sous un flux d'argon (100 ml/min) durant 2h. Le réacteur est thermostaté à 25°C tout au long de la synthèse.

Le flux d'argon est ensuite ralenti à 30 ml/min et l'irradiation du mélange réactionnel démarre. La lampe utilisée pour fournir le rayonnement UV est une lampe HPK^{™} à vapeur de mercure de 125 W. Puis, 10 ml de la solution de nitrate de chrome sont ajoutés au mélange. Le mélange est laissé 1 heure sous agitation et irradiation. On ajoute ensuite 1 ml d'une solution de NH₃ à 30%. Le mélange est à nouveau laissé 1 heure sous agitation et sans irradiation.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide E Cr₂O₃/Rh/(Ga_{0,88}Zn_{0,12})(N_{0,88}O_{0,12}). La teneur en élément Cr est mesurée par ICP-AES à 0,46 % en masse. Par mesure XPS, on mesure un recouvrement des particules de rhodium supérieur à 93%. Par microscopie électronique à transmission, on mesure une épaisseur de couche moyenne d'oxyde de chrome de 2 à 3 nm autour des particules métalliques.

### Exemple 6 : Solide F (non-conforme à l'invention) Ce₂O₃/Pt/TiO₂

Cet exemple est effectué sans irradiation lors de l'étape b).

0,0710 g de H₂PtCl₆,6H₂O (37,5% en masse de métal, Aldrich^{™}) est ajouté dans 500 ml d'eau distillée. 50 ml de cette solution sont prélevés et ajoutés dans un réacteur double enveloppe en verre. 3 ml de méthanol puis 250 mg de TiO₂ (P25, Degussa^{™}) sont alors ajoutés sous agitation pour former une suspension.

Le mélange est alors laissé sous agitation et sous rayonnement UV pendant deux heures. La lampe utilisée pour fournir le rayonnement UV est une lampe HPK^{™} à vapeur de mercure de 125 W.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors un solide F' Pt/TiO₂. La teneur en élément Pt mesurée par ICP-AES est de 0,94 % en masse.

Une solution de Ce(NO₃)₃ est préparée en dissolvant 0,05 g de Ce(NO₃)₃, 6H₂O (Sigma-Aldrich^{™}, 99%) dans 50 ml d'H₂O.

Dans le réacteur, ont été introduits : 0,10 g du solide E', 25 ml d'eau distillée et enfin 25 ml d'isopropanol. Le système est purgé à l'obscurité sous un flux d'argon (100 ml/min) durant 2h. Le réacteur est thermostaté à 25°C tout au long de la synthèse.

Le flux d'argon est ensuite ralenti à 30 ml/min. Puis, 10 ml de la solution de nitrate de cérium sont ajoutés au mélange. Le mélange est laissé 1 heure sous agitation et sans irradiation. On ajoute ensuite 1 ml d'une solution de NH₃ à 30%. Le mélange est à nouveau laissé 1 heure sous agitation et sans irradiation.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide F Ce₂O₃/Pt/TiO₂. La teneur en élément Ce mesurée par ICP-AES est de 3,8 % en masse. Par mesure XPS, on mesure un recouvrement des particules de platine de l'ordre de 21% et des phases d'oxydes de cérium à 76% en Ce₂O₃ et 24% en CeO₂. Par microscopie électronique à transmission, on distingue parfois une couche d'oxyde de cérium autour des particules métalliques sans parvenir à mesurer une épaisseur moyenne en raison de l'inhomogénéité de la répartition.

### Exemple 7 : Solide G (non-conforme à l'invention) In₂O₃/Pt/TiO₂

Cet exemple est effectué sans irradiation lors de l'étape b).

0,0710 g de H₂PtCl₆,6H₂O (37,5% en masse de métal, Aldrich^{™}) est ajouté dans 500 ml d'eau distillée. 50 ml de cette solution sont prélevés et ajoutés dans un réacteur double enveloppe en verre. 3 ml de méthanol puis 250 mg de TiO₂ (P25, Degussa) sont alors ajoutés sous agitation pour former une suspension.

Le mélange est alors laissé sous agitation et sous rayonnement UV pendant deux heures. La lampe utilisée pour fournir le rayonnement UV est une lampe HPK^{™} à vapeur de mercure de 125 W.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors un solide G' Pt/TiO₂. La teneur en élément Pt mesurée par ICP-AES est de 0,94 % en masse.

Une solution d'In(NO₃)₃ est préparée en dissolvant 0,05 g d'In(NO₃)₃, xH₂O (Sigma-AIdrich^{™}, 99,9%) dans 50 ml d'H₂O.

Dans le réacteur, ont été introduits : 0,10 g du solide F', 25 ml d'eau distillée et enfin 25 ml d'isopropanol. Le système est purgé à l'obscurité sous un flux d'argon (100 ml/min) durant 2h. Le réacteur est thermostaté à 25°C tout au long de la synthèse.

Le flux d'argon est ensuite ralenti à 30 ml/min. Puis, 10 ml de la solution de nitrate d'indium sont ajoutés au mélange. Le mélange est laissé 1 heure sous agitation et sans irradiation. On ajoute ensuite 1 ml d'une solution de NH₃ à 30%. Le mélange est à nouveau laissé 1 heure sous agitation et sans irradiation.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide G In₂O₃/Pt/TiO₂. La teneur en élément In mesurée par ICP-AES est de 3,6 % en masse. Par mesure XPS, on mesure un recouvrement des particules de platine de l'ordre de 16%. Par microscopie électronique à transmission, on distingue parfois une couche d'oxyde d'indium autour des particules métalliques sans parvenir à mesurer une épaisseur moyenne en raison de l'inhomogénéité de la répartition.

## Revendications

1. Procédé de préparation par condensation photo-assistée d'une composition comprenant un support contenant un semi-conducteur présentant à sa surface des particules de type cœur-couche, ledit cœur comportant un ou plusieurs élément(s) M à l'état métallique choisi parmi le platine, le palladium, l'or, le nickel, le cobalt, le ruthénium, l'argent, le cuivre, le rhénium ou le rhodium, ladite couche comportant un oxyde métallique M'ₓO_{y}, ledit cœur est en contact direct avec ledit semi-conducteur du support et la couche recouvre au moins partiellement ledit cœur, ledit procédé comprenant les étapes suivantes :
a) on fournit un semi-conducteur comportant des particules comportant un ou plusieurs élément(s) M à l'état métallique en sa surface, et on le met en suspension sous agitation et sous irradiation par une source d'irradiation telle qu'au moins une partie du spectre d'émission de ladite source soit composée de photons d'énergies supérieures à la largeur de bande interdite du semi-conducteur,
b) on introduit sous agitation et sous irradiation de ladite source d'irradiation un précurseur soluble d'un métal M' au même degré d'oxydation que celui de l'oxyde métallique de la couche M'ₓO_{y} recherchée dans la suspension de l'étape a), ledit précurseur métallique M' contenant du gallium, de l'indium, du cérium, de l'étain, du thallium, du plomb ou du bismuth,
c) on introduit ensuite sous agitation et sous irradiation de ladite source d'irradiation un agent basique ou acide de manière à provoquer la précipitation de l'oxyde métallique M'ₓO_{y} dans la suspension de l'étape b),
d) puis on sépare la composition de la suspension de l'étape c),
e) on sèche la composition obtenue à l'étape d),
f) éventuellement, on soumet la composition séchée obtenue à l'étape e) à un traitement thermique.

2. Procédé de préparation selon la revendication 1, dans lequel, à l'étape a), le semi-conducteur comportant des particules comportant un ou plusieurs élément(s) M à l'état métallique en sa surface est obtenu par imprégnation, suivi éventuellement par un traitement réducteur en température.

3. Procédé de préparation selon la revendication 1, dans lequel, à l'étape a), le semi-conducteur comportant des particules comportant un ou plusieurs élément(s) M à l'état métallique en sa surface est obtenu par photodéposition.

4. Procédé de préparation selon la revendication 3, dans lequel le semi-conducteur comportant des particules comportant un ou plusieurs élément(s) M à l'état métallique en sa surface est obtenu en préparant sous agitation une suspension contenant un semi-conducteur, dans un mélange liquide composé d'eau et/ou d'un ou plusieurs composés organiques et au moins un précurseur métallique, et on irradie la suspension par une source d'irradiation telle qu'au moins une partie du spectre d'émission de ladite source soit composée de photons d'énergies supérieures à la largeur de bande interdite du semi-conducteur.

5. Procédé selon l'une des revendications 1 à 4, dans lequel le semi-conducteur utilisé comme support est choisi parmi un semi-conducteur inorganique, organique ou organique-inorganique.

6. Procédé selon la revendication 5, dans lequel le semi-conducteur est choisi parmi le TiO₂, le CdO, le Ce₂O₃, le CeO₂, le CoO, le Cu₂O, le CuO, le FeTiO₃, l'In₂O₃, l'In(OH)₃, le NiO, le PbO, le ZnO, le ZnFe₂O₄, l'Ag₂S, le CdS, le Ce₂S₃, le Cu₂S, le CuInS₂, l'In₂S₃, le ZnS et le ZrS₂.

7. Procédé selon l'une des revendications 1 à 6, dans lequel l'agent basique est choisi parmi les hydroxydes d'alcalins ou d'alcalinoterreux et les bases organiques, et l'agent acide est choisi parmi les acides inorganiques.

8. Procédé selon l'une des revendications 1 à 7, dans lequel la source d'irradiation est une source d'irradiation artificielle ou naturelle.

9. Procédé selon l'une des revendications 1 à 8, dans lequel, dans l'étape d), la séparation est effectuée par centrifugation.

10. Procédé selon l'une des revendications 1 à 9, dans lequel, dans l'étape e), le séchage est effectué entre 30°C et 200°C.

## Patentansprüche

1. Verfahren zur Herstellung einer Zusammensetzung, umfassend einen Träger, der einen Halbleiter enthält, der an seiner Oberfläche Teilchen vom Kern-Schale-Typ aufweist, durch lichtunterstützte Kondensation, wobei der Kern ein oder mehrere Elemente (M) im metallischen Zustand, ausgewählt aus Platin, Palladium, Gold, Nickel, Cobalt, Ruthenium, Silber, Kupfer, Rhenium oder Rhodium, umfasst, wobei die Schale ein Metalloxid M'ₓO_{y} umfasst, der Kern in direktem Kontakt mit dem Halbleiter des Trägers steht und die Schale den Kern mindestens teilweise bedeckt, wobei das Verfahren die folgenden Schritte umfasst:
a) man stellt einen Halbleiter bereit, der an seiner Oberfläche Teilchen umfasst, die ein oder mehrere Elemente (M) im metallischen Zustand umfassen, und suspendiert ihn unter Rühren und unter Bestrahlung mit einer Bestrahlungsquelle derart, dass mindestens ein Teil des Emissionsspektrums der Quelle aus Photonen mit Energien, die größer als die Bandlücke des Halbleiters sind, besteht,
b) man trägt unter Rühren und unter Bestrahlung mit der Bestrahlungsquelle einen löslichen Vorläufer eines Metalls M' mit der gleichen Oxidationsstufe wie das Metalloxid der gewünschten M'ₓO_{y}-Schale in die Suspension aus Schritt a) ein, wobei der Metallvorläufer M' Gallium, Indium, Cer, Zinn, Thallium, Blei oder Bismut enthält,
c) man trägt dann unter Rühren und unter Bestrahlung mit der Strahlungsquelle ein basisches oder saures Mittel ein, um die Ausfällung des Metalloxids M'ₓO_{y} in der Suspension von Schritt b) zu bewirken,
d) dann trennt man die Zusammensetzung aus der Suspension von Schritt c) ab,
e) man trocknet die in Schritt b) erhaltene Zusammensetzung,
f) gegebenenfalls unterwirft man die in Schritt e) erhaltene getrocknete Zusammensetzung einer Wärmebehandlung.

2. Herstellungsverfahren nach Anspruch 1, bei dem in Schritt a) der Halbleiter, der an seiner Oberfläche Teilchen umfasst, die ein oder mehrere Elemente M in metallischem Zustand umfassen, durch Tränken, gegebenenfalls mit anschließender Temperatursenkungsbehandlung, erhalten wird.

3. Herstellungsverfahren nach Anspruch 1, bei dem in Schritt a) der Halbleiter, der an seiner Oberfläche Teilchen umfasst, die ein oder mehrere Elemente M in metallischem Zustand umfassen, durch Photoabscheidung erhalten wird.

4. Herstellungsverfahren nach Anspruch 3, bei dem der Halbleiter, der an seiner Oberfläche Teilchen umfasst, die ein oder mehrere Elemente M in metallischem Zustand umfassen, dadurch erhalten wird, dass man unter Rühren eine einen Halbleiter enthaltende Suspension in einer flüssigen Mischung aus Wasser und/oder einer oder mehreren organischen Verbindungen und mindestens einem Metallvorläufer herstellt und die Suspension mit einer Bestrahlungsquelle derart bestrahlt, dass mindestens ein Teil des Emissionsspektrums der Quelle aus Photonen mit Energien, die größer als die Bandlücke des Halbleiters sind, besteht.

5. Verfahren nach einem der Ansprüche 1 bis 4, bei dem der als Träger verwendete Halbleiter aus einem anorganischen, organischen oder organischanorganischen Halbleiter ausgewählt wird.

6. Verfahren nach Anspruch 5, bei dem der Halbleiter aus TiO₂, CdO, Ce₂O₃, CeO₂, CoO, Cu₂O, CuO, FeTiO₃, In₂O₃, In(OH)₃, NiO, PbO, ZnO, ZnFe₂O₄, Ag₂S, CdS, Ce₂S₃, Cu₂S, CuInS₂, In₂S₃, ZnS und ZrS₂. ausgewählt wird.

7. Verfahren nach einem der Ansprüche 1 bis 6, bei dem das basische Mittel aus Alkali- oder Erdalkalihydroxiden und organischen Basen ausgewählt wird und das saure Mittel aus anorganischen Säuren ausgewählt wird.

8. Verfahren nach einem der Ansprüche 1 bis 7, bei dem es sich bei der Bestrahlungsquelle um eine künstliche oder natürliche Bestrahlungsquelle handelt.

9. Verfahren nach einem der Ansprüche 1 bis 8, bei dem in Schritt d) die Abtrennung durch Zentrifugation erfolgt.

10. Verfahren nach einem der Ansprüche 1 bis 9, bei dem in Schritt e) das Trocknen zwischen 30 °C und 200 °C erfolgt.

## Claims

1. Process for preparing, by photo-assisted condensation, a composition comprising a support containing a semiconductor having, at its surface, particles of core-shell type, said core comprising one or more element(s) M in the metal state chosen from platinum, palladium, gold, nickel, cobalt, ruthenium, silver, copper, rhenium or rhodium, said shell comprising a metal oxide M'ₓO_{y}, wherein said core is in direct contact with said semiconductor of the support and the shell at least partially covers said core, said process comprising the following steps:
a) a semiconductor comprising particles comprising one or more element (s) M in the metal state at its surface is provided, and is suspended with stirring and under irradiation by an irradiation source such that at least one part of the emission spectrum of said source is composed of photons having energies greater than the bandgap of the semiconductor,
b) a soluble precursor of a metal M' with the same oxidation state as that of the metal oxide of the M'ₓO_{y} shell desired is introduced, with stirring and under irradiation from said irradiation source, into the suspension of step a), said metal precursor M' containing gallium, indium, cerium, tin, thallium, lead or bismuth,
c) a basic or acidic agent is then introduced, with stirring and under irradiation from said irradiation source, so as to bring about the precipitation of the metal oxide M'ₓO_{y} in the suspension of step b),
d) the composition is then separated from the suspension of step c),
e) the composition obtained in step d) is dried,
f) optionally, the dried composition obtained in step e) is subjected to a heat treatment.

2. Preparation process according to Claim 1, in which, in step a), the semiconductor comprising particles comprising one or more element (s) M in the metal state at its surface is obtained by impregnation, optionally followed by a temperature-reducing treatment.

3. Preparation process according to Claim 1, in which, in step a), the semiconductor comprising particles comprising one or more element (s) M in the metal state at its surface is obtained by photodeposition.

4. Preparation process according to Claim 3, in which the semiconductor comprising particles comprising one or more element(s) M in the metal state at its surface is obtained by preparing, with stirring, a suspension containing a semiconductor, in a liquid mixture composed of water and/or of one or more organic compounds and at least one metal precursor, and the suspension is irradiated by an irradiation source such that at least one part of the emission spectrum of said source is composed of photons having energies greater than the bandgap of the semiconductor.

5. Process according to one of Claims 1 to 4, in which the semiconductor used as a support is chosen from an inorganic, organic or organic-inorganic semiconductor.

6. Process according to Claim 5, in which the semiconductor is chosen from TiO₂, CdO, Ce₂O₃, CeO₂, CoO, Cu₂O, CuO, FeTiO₃, In₂O₃, In(OH)₃, NiO, PbO, ZnO, ZnFe₂O₄, Ag₂S, CdS, Ce₂S₃, Cu₂S, CuInS₂, In₂S₃, ZnS and ZrS₂.

7. Process according to one of Claims 1 to 6, in which the basic agent is chosen from alkali metal or alkaline-earth metal hydroxides and organic bases, and the acidic agent is chosen from inorganic acids.

8. Process according to one of Claims 1 to 7, in which the irradiation source is an artificial or natural irradiation source.

9. Process according to one of Claims 1 to 8, in which, in step d), the separation is carried out by centrifugation.

10. Process according to one of Claims 1 to 9, in which, in step e), the drying is carried out between 30°C and 200°C.
